# EUROPEAN PATENT SPECIFICATION

(11) **EP 2 228 306 B1**
(45) Date of publication and mention of the grant of the patent: **01.08.2012**
(21) Application number: 09012862.0
(22) Date of filing: 12.10.2009
(51) Int. Cl.: B65B 11/34, B65B 25/00, B65B 51/00, B65B 51/22

(54) **Packaging machine with induction heating and flux guide means**
Verpackungsmaschine mit Induktionsheizung und Flussführungsmitteln
Machine de conditionnement avec chauffage par induction et supports de guidage de flux

(30) Priority: 12.03.2009 EP 09003602
(43) Date of publication of application: 15.09.2010
(73) Proprietor: CFS Weert B.V., 6006 RV Weert (NL)
(72) Inventor: van Rens, Joseph Johan Maria, 6003 BK Weert (NL)
(74) Representative: Wolff, Felix

(56) References cited:
- WO-A1-2006/108781
- US-A1- 2006 254 709

## Description

The present invention relates to an apparatus for packaging items into a film, whereas the film is formed and or sealed by forming- and/or sealing-means each comprising a heating body which is heated by induction heating means and which is moving and/or difficult to access.

These machines are known from the state of the art and often comprise a sealing- and/or forming means and/or a heating body, which is/are heated by induction heating and which is moving and/or difficult to access. It is, however, in many cases a problem to transfer the heating-energy to the sealing- and/or forming-means and/or the heating body. It is furthermore a problem to measure the temperature of the sealing- and/or forming-means and/or the heating body. WO 2006/108781 A1 shows such a machine.

It was therefore an objective of the present invention to provide an apparatus for packaging items into a film, which does not comprise the deficiencies of the state of the art.

The problem is solved with an apparatus for packaging items into a film, whereas the film is formed and or sealed by forming- and/or sealing-means each comprising a heating body which is heated by induction heating means and which is moving and/or difficult to access and whereas the induction heating means comprises flux guide means.

The present invention relates to an apparatus for packaging items into a film, such as sweets-packaging-machine, especially lollipop-packaging-machines. Other inventive apparatus are form-fill-seal-packaging-machines such as vertical- or horizontal flow-wrappers, thermoformer or tray-sealer

According to the present invention, the apparatus comprises forming- and/or sealing means. With this means, the film is formed and or it is sealed under the influence of heat and/or pressure. Sealed in terms of the present invention means, that the edges or the twisted part of one film are sealed together and/or two or more films are sealed together. The apparatus comprises forming- and or sealing means and a heating body, which is heated by heating means. This heating body is located at and/or in or apart from the forming- and or sealing means. However, the heating body can also be at least partially identical with the forming- and or sealing means.

According to the present invention, the heat energy is transferred from the heating means to the heating body by induction. Preferably, the heating means is stationary, while the heating body is moving. Additionally or alternatively, the heating body is difficult to access, e.g. the heating body is locate inside the film tube of a flow wrapper, so that it is difficult if not impossible to realize a direct contact between the heating means and the heating body. More preferably, there is only one heating means for a multitude of heating bodies.

According to the present invention, the apparatus comprises flux guide means, which guide the magnetic flux from a coil to a desired location, e.g. a point, a line, an area or a volume. Thus, it is possible separate the coil from the location and/or the path of the heating body. Preferably, the flux guide means comprises an inlet and an outlet, which are separated from each other. More preferably, the heating body passes through the heating body from the inlet to the outlet.

In case that the heating body is moving, it preferably moves around a circular path.

In a preferred embodiment of the present invention, the flux guide means and/or its cross-section is U- or C-shaped. The U and C each comprise a base and two legs to the left and to right of the base. In case the heating body is moving, it is preferably guided through the two legs of the U- or C-shaped flux guide means. At the tip of each leg the U- or C-shaped flux guide means preferably comprise extensions, which are more preferably oriented in a right angle.

In a preferred embodiment of the present invention, the flux guide means comprise a section which is tangentially oriented to a circular moving path of the heating body.

Preferably, the electrical conductivity of the flux guide means is < 10 S/m, more preferably < 5 S/m and most preferably < 1 S/m.

According to a preferred embodiment of the present invention, the relative permeability of the flux guide means is > 300, and ≤ 25.000, more preferably > 500 and ≤ 20.000.

Preferably, the electrical conductivity of the heating body is < 1.0e⁶ S/m - 1,12e⁷ S/m.

Preferably the relative permeability of the heating body is > 2000, and ≤ 25.000, preferably > 2500 and ≤ 24.000.

Preferably, there is an air gap between the flux guide means and the heating body, whereas this air gap is preferably < 5 mm, more preferably < 3 mm and even more preferably <1 mm.

According to the present invention or according to a preferred embodiment of the present invention, the apparatus comprises a multitude of forming- and/or sealing-means and/or heating bodies, whereas each forming- and/or sealing-means and/or heating bodies comprise temperature measurement means, respectively, which are connected to the forming- and/or sealing-means. According to the present invention, these temperature measurement means do not have any wire connection, which provide them with electrical energy and/or which transmit signals to or from the temperature measurement means. The energy is preferably transmitted via radiation and/or electro-magnetic-waves. Preferably the temperature measurement is done prior to the heating of the heating body.

Preferably, each forming- and/or sealing-means and/or the heating body comprise a transmitter and/or a receiver that transmits or receives information. The transmitter preferably transmits an information, for example the measured temperature and/or the number of the each forming- and/or sealing-means and/or the heating body. The receiver preferably receives the energy to operate the temperature measurement means and/or the transmitter. The energy transfer is preferably executed as described above.

Preferably, the apparatus comprises an energy source that transmits the energy to the receiver. Even more preferred, the apparatus comprises a receiver, which receives a signal sent from the transmitter at the each forming- and/or sealing-means and/or the heating body. Preferably, this transmitter and receiver is stationary.

In case that the each forming- and/or sealing-means and/or the heating body and their individual transmitter and/or receiver is moving, the energy and/or information is exchanged, when the each forming- and/or sealing-means and/or the heating body pass the stationary transmitter and/or receiver, respectively.

In case the temperature and an identification, for example the number of each forming- and/or sealing-means and/or the heating body, are transmitted, a very precise control of the temperature of the heating body can be achieved. Based on the measured temperature, the heat energy which is needed to get the desired temperature of the heating body is calculated and this energy is transferred to the heating body. This preferred embodiment of the present invention has the advantage that the packaging machine is very energy efficient and no overheating of the product and/or the packaging material takes place.

According to another subject matter of the present invention or according to a preferred embodiment, the apparatus comprises an infrared temperature measurement means, whereas the measurement is carried out in a dark (black) environment. This means measures for example the temperature of each forming- and/or sealing-means and/or the heating body, preferably, while it passes the measurement means. This inventive or preferred embodiment of the present invention has the advantage, that the measurement is independent from the colour of the measured object, which is especially important, since the colour of the measured object changes with temperature or due to contamination.

According to another subject matter or a preferred embodiment of the present invention, the forming- and/or sealing-means are partially insulated.

Preferably there is one heating means for one or more heating bodies, which for example move past the stationary heating means and are thereby heated.

Preferably the confectionary is a lollipop with a stick, whereas the lollipop head is packaged in a packaging sheet, such as a packaging film, the packaging film is sealed at its edges with sealing means, each comprising a heating body and the heat energy is transferred to the heating body via induction.

Preferably, the sealing means are located on a drum.

One preferred aspect of the present invention is a packaging machine for lollipops, comprising a drum having a stationary, fixed drum part and having a drum part that is rotatable with respect thereto and includes a series of stick holders, a supply for the lollipops towards the stick holders and a supply for packaging material for the lollipops, such as a foil, towards the drum, a discharge for discharge of packaged lollipops away from the drum, wherein the packaging material supply is adapted for consecutively bringing a sheet of packaging material in front of the lollipop heads, wherein the drum is furthermore provided with means for relatively moving the stick holder and the sheet of packaging material in a first trajectory on the drum in order to let said sheet envelop or surround the lollipop head, wherein the rotatable drum part is preferably furthermore provided with a diaphragm at every stick holder, said diaphragm being positioned at the side of the sheet of packaging material facing away from the lollipop head in order to dispose said sheet around the head in said relative movement of the stick holder and said sheet of packaging material, in which the head moves through the opening defined by the diaphragm, wherein the diaphragm is furthermore provided with means for in a next, second trajectory on the drum sealing the packaging material at or near the location of the transition of the head to the stick, wherein the sealing is carried out by sealing-means each comprising a heating body which is heated by heating means, whereas the heat energy is transferred to the heating body via induction

Another preferred aspect of the present invention is a vertical flow wrapper with a forming shoulder to form a film tube from a planar film, a filling tube to fill packaging items into the film tube, longitudinal sealing means to apply a longitudinal seal to the film tube, cross sealing/cutting-means to apply cross seals to the film tube and to cut the filled bag from the film tube, whereas the filling tube comprises preferably fins and sealing means to produce edges in the film tube. Whereas the filling tube preferably comprises a heating body which is heated via induction. In another preferred embodiment the longitudinal sealing means are heated via induction.

Preferably, the heating body is part of the fin. Preferably, each fin comprises a heating body.

The invention is now explained in further detail according to figures 1 - 5.
- Figure 1: shows a diagrammatic front view of a device for the double-twist packaging of lollipops, provided with a device according to the invention, in an exemplary embodiment;
- Fig. 2: shows a diagrammatic side view of a unit for double-twist packaging a lollipop in the device from Fig. 1;
- Figures: 3A - E show a flux guide means.
- Figure4: show a temperature measurement device.
- Figure 5: show the temperature measurement device as part of the lollipop-machine.
- Figure 6: show another embodiment of the temperature measurement device.

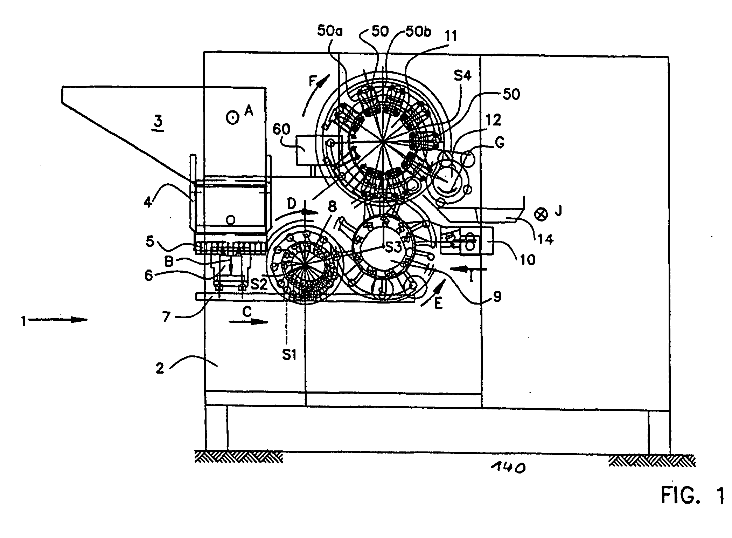

The packaging device 1 in Figure 1 comprises a frame 2 which is placed on a base 100. The device 1 comprises a supply container 3 for lollipops provided with a stick and a head, supplied in bulk in the direction A. At its bottom end, the container changes into a passage which has a shaking slope 5/6 on its bottom side which passes the lollipops in a stream in the direction B to a distribution disc 7 rotatable in the direction C along a vertical centre line S1. The distribution disc 7 has a relatively large surface, on which the lollipops supplied in bulk can be spread out. The distribution disc 7 is provided on the edge with holding spaces for the head of the lollipops and with radially outwardly extending slots for the sticks thereof. The lollipops with lollipop sticks are brought into an orientation with the sticks directed radially outwardly and then retained with the aid of means (not shown), which are known per se. On the edge of the distribution disc 7, there is a second process wheel 8, which is rotatable in the direction D about a horizontal centre axis S2. Stick clamps are arranged on the second process wheel, which grasp the lollipops by their sticks and lift them from the distribution disc 7.

Downstream of the second process wheel 8, a third process wheel 9 is arranged which rotates in the direction E about the centre axis S3. A series of lollipop holders is arranged on the third process wheel 9, at each of which a film/foil sheet clamp is positioned. A film/foil feed station 10 is positioned at the third process wheel 9, in which a roll of film/foil sheet material can be placed and unwound and can be cut into separate sheets F₁, delivered intermittently to the third process wheel 9.

Downstream of the third process wheel 9, viewed in processing direction, a fourth process wheel 11 is disposed, which is rotatably driven in the direction F about the centre axis S4. The fourth process wheel 11 is provided with a series of co-rotating lollipop holders 50 and a series of co-rotating wrappers, as well as heat-sealing means for heat-sealing the two twisted ends of the film/foil packaging sheet on the lollipop.

Lollipops packaged in the fourth process wheel 11 are passed on to a discharge wheel 12, which rotates in the direction G and can deliver the lollipops to a discharge 14 in order for them to be discharged in the direction J.

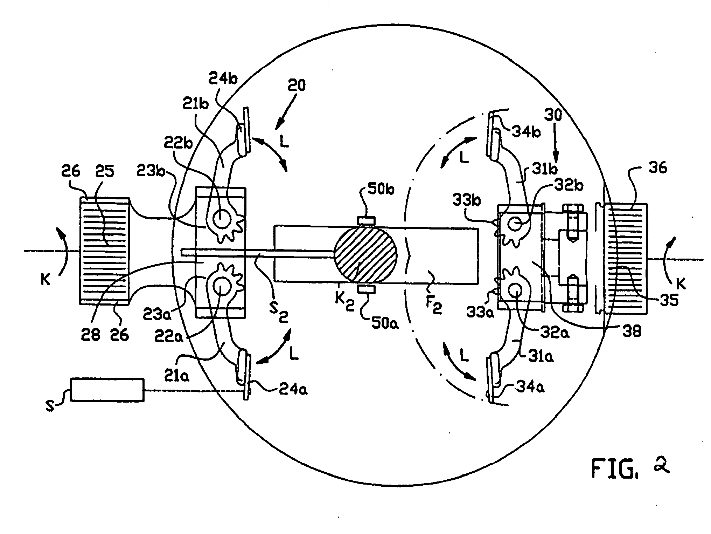

In Fig. 2, one of the pairs of wrappers 20/30 of the fourth process wheel 11 is illustrated in side view. It will be understood that the fourth process wheel 11 is situated at right angles to the plane of the drawing, the illustrated lollipop L with the stick S₁ being situated parallel to the centre axis S4.

The lollipop holders 50 are illustrated diagrammatically and are clamped radially on the lollipop head K₁ by means of clamping jaws 50a, 50b while clamping the film/foil sheet F₁ present in tubular form in between. The longitudinal seam of the film/foil sheet runs parallel to the stick S₁.

The left-hand wrapper 20 comprises a holder 28 with two arms 21 a, 21 b, which are pivotably attached to the holder 28 at 22a, 22b and are provided with toothings 23a, 23b at that end. In a manner known per se, these toothings are in engagement with a toothed rack (not shown), which can be moved to and fro in the direction parallel to the stick S₁. As a result of this movement, the arms 21 a, 21 b will rotate in the direction L, between a radially projecting, non-operating position, illustrated in the figure, and a closed, operating position.

At their ends, the wrapping arms 21 a, 21 b are provided with clamping panels 24a, 24b, with which a film/foil tube can be clamped flat.

The wrapper 30 is constructed in a similar way and has a holder 38 with two wrapping arms 31 a, 31 b, which are pivotably attached to the holder 38 at the location of pivots 32a, 32b, and are there provided with toothings 33a, 33b, which engage again in a toothed rack in a manner known per se, which toothed rack can be moved to and fro in a direction parallel to the stick S₁.

At their ends, the wrapping arms 31 a, 31 b are provided with clamping panels 34a, 34b, with which a film/foil tube can be clamped flat.

Both holders 28, 38 are rotatable in the direction K, about a centre axis parallel to the stick S₁, and to this end are provided with toothed wheels 25, 35, the teeth 26, 36 of which are in permanent engagement with an inner toothing 41 on a fixedly arranged ring 40, see Fig. 2A (for toothed wheel 25: toothed wheel 35 is driven in a similar fashion).

The holders 28, 38 are mounted so as to be rotatable about their centre axes in the rotating section of the fourth process wheel 11. During rotation of the fourth process wheel 11, the teeth 26, 36 of the toothed wheels 25, 35 will therefore run along the fixed annular toothing 41, so that the holders 28, 38 and thus the wrappers 20, 30 are rotated in the direction K.

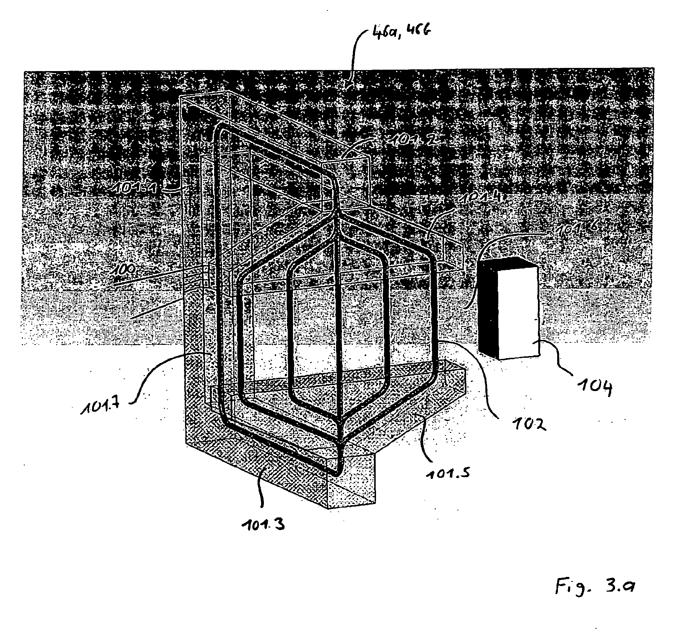

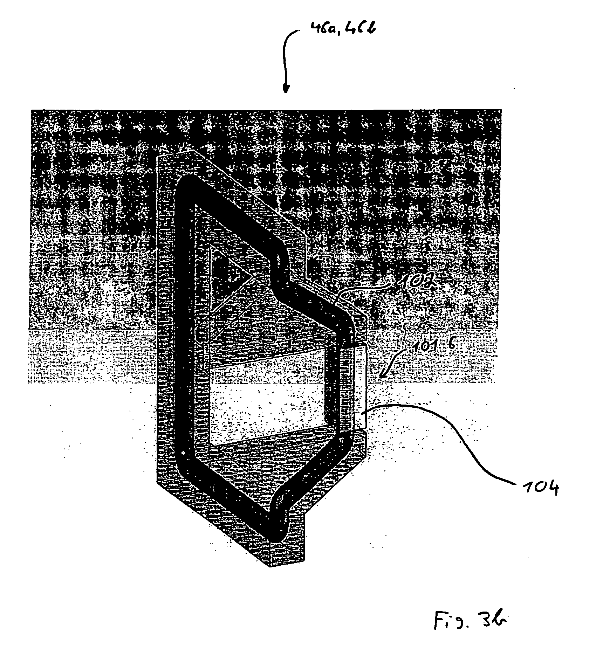

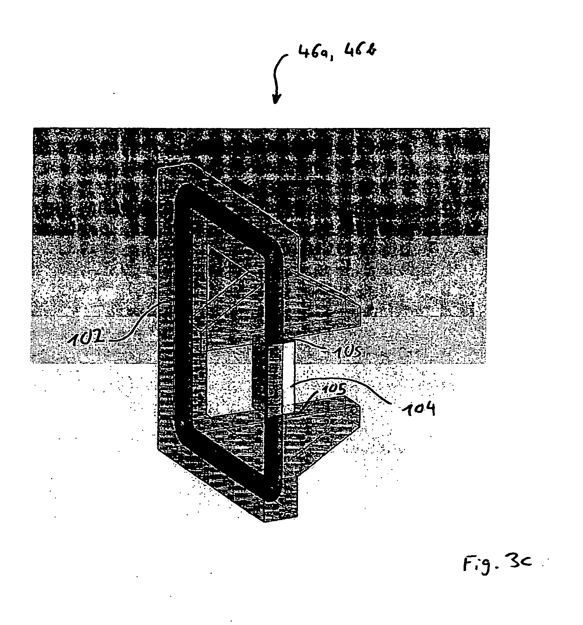

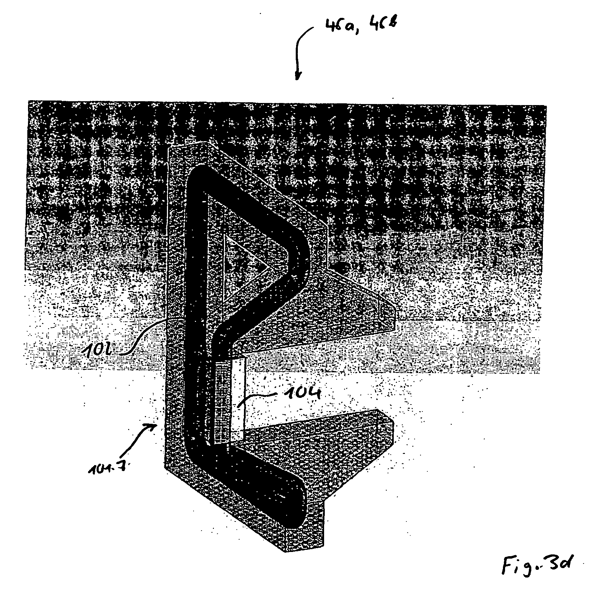

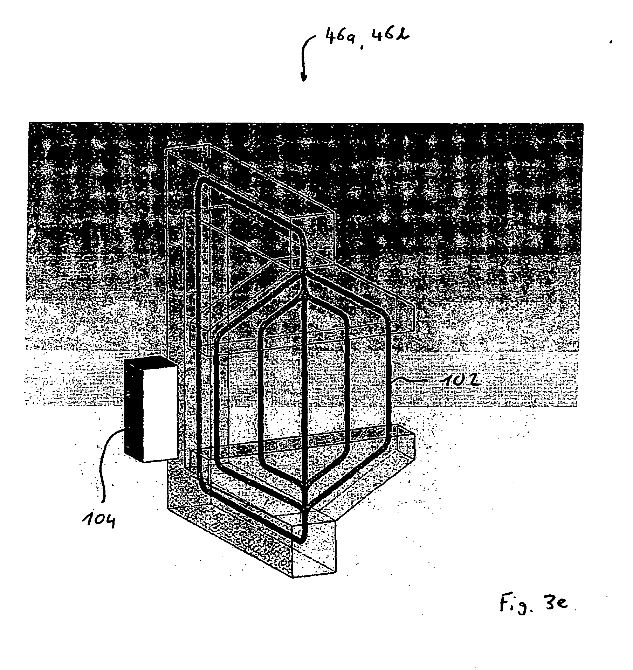

If the twisting arms 21 a, 21 b remain in the projecting position, they will follow a garland-like path V during the rotation. In the radially outermost positions, there will be a short moment where they will not move in the peripheral direction, but instead their radially outward movement will change into a radially inward movement. It should be noted that the number of such turning positions can be larger or smaller, depending on the ratio of the diameter of the toothings 41 and 26, 36. The flux guiding means, as described in greater detail according to figures 3, are arranged in the path of the twisting arms and heat the clamping panel 24b. Due to the flux guiding means, they need not be placed in these turning positions.

Figure 3A shows induction heating means 46a, 46b which comprise a coil 100 which provides the magnetic field. In Figures 3B - E, the coil has been omitted for the sake of simplicity. Furthermore, the induction heating means comprise flux guide means 101. In the present example these flux guide means 101 are essentially U-shaped with a base 101.1 and legs 101.2, 101.3. At the tip of the legs, the flux guide means comprise extensions 101.4, 101.5. As already said above, the magnetic field 102 is provided by coil 100 and then guided and spread by the flux guide means 101 as schematically shown in this figure. At least one, preferably a multitude of heating body(ies) 104, which are for example the clamping panel 24 according to figures 2, passes around a e.g. circular pass and during this motion from the inlet 101.6 of the flux guide means thru the gap between the extensions 101.4, 101.5 to the outlet of the flux guide means 101. 7. Between the heating body 104 and the extensions 101.4, 101.5 is an air gap 105, respectively, which is preferably as small as possible. It can be clearly seen, that the coil 100 and the location where the heating body 104 is heated are separated from each other. The flux guide means transfer the flux from the coil to a location where it is needed and/or where it easily accessible.

Figure 3B shows the heating body 104 at the inlet 101.6 of the flux guide means 101. As soon as the heating body enters the flux guide means the entire flux flows thru the heating body and as can be seen in figures 3C and 3D. The combined magnetic flux moves with the heating body 104 thru the flux guide means 101. As can be seen in figure 3E, as soon as the heating body 104 has left the flux guide means 101, the magnetic field spreads over the entire length of the flux guide means 101.4, 101.5.

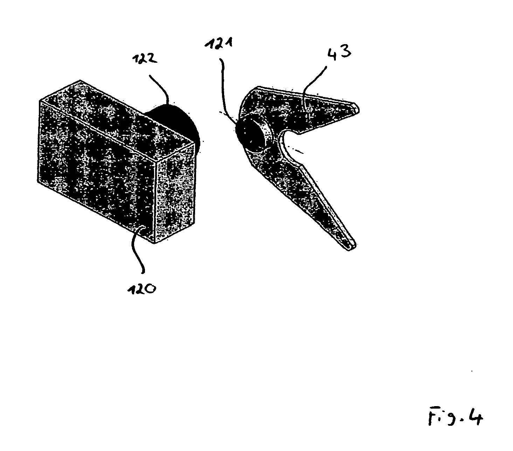

Figure 4 shows sealing means 43 for example of a lollipop machine which comprises temperature measurement means (not depicted). The signals of this temperature measurement means are transferred to a transmitter/receiver 121 which transmits the measured temperature and/or an identification signal, for example the number of the sealing means 43, wirelessly to the transmitter/receiver 122 of a stationary temperature measurement unit 120. Thus, the control mechanism of the machine knows the temperature of the sealing means 43. This information is transferred while the sealing means 43 pass the temperature measurement unit 120. While passing the temperature measurement unit 120, energy is also transmitted from the unit 122 to the transmitter/receiver 121 so that the transmitter and the temperature measurement means can be operated wirelessly.

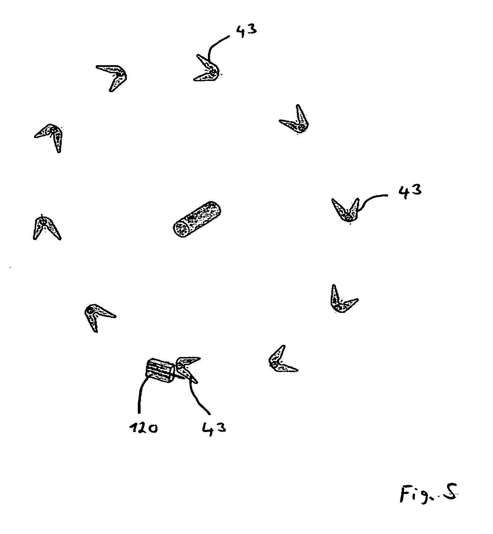

Figure 5 shows the inventive packaging machines with a multitude of sealing means 43, as depicted in figure 14 and which move around a circular path, as schematically depicted in this figure. While passing the temperature measurement unit 120 the temperature of each individual sealing means as well as the identification is wirelessly transmitted to the temperature measurement unit 120 so that the machine knows the temperature of each sealing means and can thus calculate the amount of heat energy needed to bring the sealing means to the desired temperature. As already said above, while passing the temperature measurement unit 120 energy is transferred from this unit to the sealing means 43 to operate the transmitter/receiver 121 as well as the temperature measurement means.

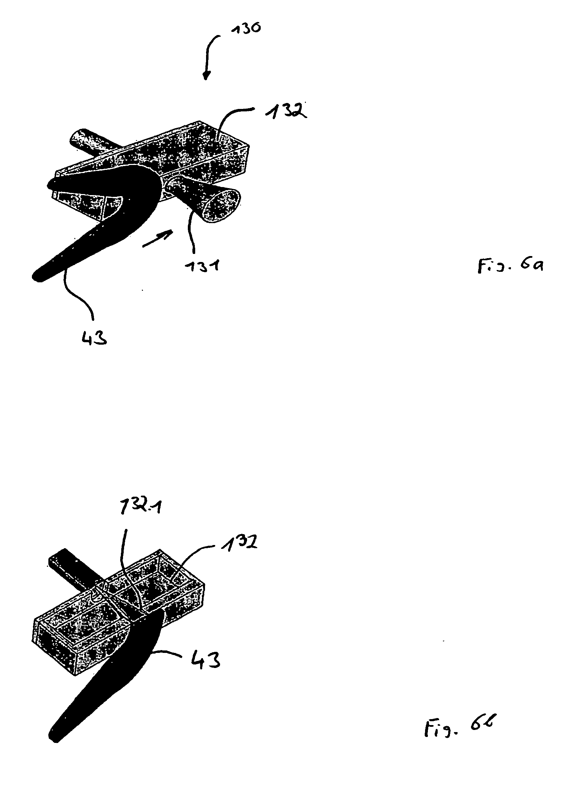

Figure 6A and 6B show an alternative embodiment to measure the temperature. In this case the temperature measurement means 130 comprise a measurement space, in this case a box, 132 thru which a laser beam 131 is directed. The sealing means 43 move, as depicted by the arrow in figure 16A. As soon as the sealing means 43 are in front of the hole 132.1 thru which the laser is emitted the measurement takes place, since, in this moment, the entire measurement space 132 in the box entirely dark(black). Thus changes in the colour of the sealing unit 43 are irrelevant.

## Claims

1. Apparatus for packaging items into a film, whereas the film is formed and/or sealed by forming- and/or sealing-means (20, 30) each comprising a heating body (24a, 24b, 34a, 34b) which is heated by induction heating means (100) and which is moving and/or difficult to access, **characterized in, that** the induction heating means (100) comprises flux guide means (101).

2. Apparatus according to claim 1, **characterized in, that** the flux guide means (101) comprises an inlet (101.6) and an outlet (101.7) and that the heating body passes through the flux guide means (101) from the inlet to the outlet.

3. Apparatus according to one of the preceding claims, **characterized in, that** the flux guide means (101) is U- or C-shaped.

4. Apparatus according to one of the preceding claims, **characterized in, that** the flux guide means comprise a section (101.4, 101.5) which is tangentially oriented to the moving path of the heating body.

5. Apparatus according to one of the preceding claims, **characterized in, that** the electrical conductivity of the flux guide means is < 10 S/m, preferably < 5 S/m and more preferably < 1 S/m.

6. Apparatus according to one of the preceding claims, **characterized in that** the relative permeability flux guide means is > 300, and ≤ 25.000, preferably > 500 and ≤ 20.000.

7. Apparatus according to one of the preceding claims, **characterized in, that** the electrical conductivity of the heating body is < 1.0e⁶ S/m -1,12e⁷ S/m.

8. Apparatus according to one of the preceding claims, **characterized in that** the relative permeability of the heating body is > 2000, and ≤ 25.000, preferably > 2500 and ≤ 24.000.

9. Apparatus according to one of the preceding claims, **characterized in, that** there is an air gap (105) between the flux guide means and the heating body and that this air gap is preferably < 5 mm, more preferably < 3 mm and even more preferably <1 mm.

10. Apparatus preferably according to one of the preceding claims, **characterized in, that** it comprises a multitude of forming- and/or sealing-means (20, 30) and that each forming- and/or sealing-means (20, 30) comprise wireless temperature measurement means, respectively, which are directly or indirectly connected to the forming- and/or sealing-means (20, 30).

11. Apparatus according to one of the preceding claims, **characterized in, that** each forming- and/or sealing-means (20, 30) comprise a transmitter (121) and/or a receiver (121) that transmits or receives energy and/or a signal wirelessly.

12. Apparatus preferably according to one of the preceding claims, **characterized in, that** it comprises infrared temperature measurement means (130) and that the measurement is carried out in a dark environment.

13. Apparatus preferably according to one of the preceding claims, **characterized in, that** the forming- and/or sealing-means (20, 30) are partially insulated.

## Patentansprüche

1. Gerät zum Verpacken von Elementen in einer Folie, wobei die Folie durch Form- und/oder Versiegelungsmittel (20, 30) gebildet und/oder versiegelt ist, jeweils umfassend einen Heizkörper (24a, 24b, 34a, 34b), der durch Induktionsheizmi.ttel (100) geheizt ist und sich bewegt und/oder schwer zugänglich ist, **dadurch gekennzeichnet, dass** das Induktionsheizmittel (100) ein Flussführungsmittel (101) umfasst.

2. Gerät nach Anspruch 1, **dadurch gekennzeichnet, dass** das Flussführungsmittel (101) einen Einlass (101.6) und einen Auslass (101.7) umfasst, und dass der Heizkörper durch die Flussführungsmittel (101) von dem Einlass zu dem Auslass durchgeht.

3. Gerät nach einem der vorhergehenden Ansprüche, **dadurch gekennzeichnet, dass** das Flussführungsmittel (101) U- oder C-förmig ist.

4. Gerät nach einem der vorhergehenden Ansprüche, **dadurch gekennzeichnet, dass** das Flussführungsmittel einen Abschnitt (101.4, 101.5) umfasst, der tangential zu dem Bewegungspfad des Heizkörpers ausgerichtet ist.

5. Gerät nach einem der vorhergehenden Ansprüche, **dadurch gekennzeichnet, dass** die elektrische Leitfähigkeit der Flussführungsmittel < 10 S/m, vorzugsweise < 5 S/m und noch mehr bevorzugt < 1 S/m ist.

6. Gerät nach einem der vorhergehenden Ansprüche, **dadurch gekennzeichnet, dass** die relative Durchlässigkeit des Flussführungsmittels > 300 und ≤ 25.0000, vorzugsweise > 500 und ≤ 20.000 ist.

7. Gerät nach einem der vorhergehenden Ansprüche, **dadurch gekennzeichnet, dass** die elektrische Leitfähigkeit des Heizkörpers < 1.0e⁶ S/m - 1,12e⁷ S/m ist.

8. Gerät nach einem der vorhergehenden Ansprüche, **dadurch gekennzeichnet, dass** die relative Durchlässigkeit des Heizkörpers > 2000 und ≤ 25.000, vorzugsweise > 2500 und ≤ 24.000 ist.

9. Gerät nach einem der vorhergehenden Ansprüche, **dadurch gekennzeichnet, dass** sich zwischen dem Flussführungsmittel und dem Heizkörper eine Luftspalte (105) befindet, und dass diese Luftspalte vorzugsweise < 5 mm, noch mehr bevorzugt < 3 mm und sogar noch mehr bevorzugt < 1 mm ist.

10. Gerät nach einem der vorhergehenden Ansprüche, **dadurch gekennzeichnet, dass** es eine Mehrzahl von Form- und/oder Versiegelungsmitteln (20,30) umfasst, und dass jedes Form- und/oder Versiegelungsmittel (20, 30) jeweils drahtlose Mittel zur Temperaturmessung umfasst, die direkt oder indirekt mit den Form- und/oder Versiegelungsmitteln (20, 30) verbunden sind.

11. Gerät nach einem der vorhergehenden Ansprüche, **dadurch gekennzeichnet, dass** jedes Form- und/oder Versiegelungsmittel (20, 30) einen Sender (121) und/oder einen Empfänger (121) umfasst, der Energie und/oder ein Signal drahtlos überträgt oder empfängt.

12. Gerät nach einem der vorhergehenden Ansprüche, **dadurch gekennzeichnet, dass** es Infrarot-Temperaturmessmittel (130) umfasst, und dass das Messen in einer dunklen Umgebung ausgeführt wird.

13. Gerät nach einem der vorhergehenden Ansprüche, **dadurch gekennzeichnet, dass** die Form- und/oder Versiegelungsmittel (20, 30) teilweise isoliert sind.

## Revendications

1. Appareil d'emballage d'articles dans un film, le film étant formé et / ou scellé par des moyens (20, 30) de formage et / ou de scellage comportant chacun un corps (24a, 24b, 34a, 34b) de chauffe qui est chauffé par un moyen (100) de chauffe par induction et qui est en mouvement et / ou difficile d'accès, **caractérisé en ce que** le moyen (100) de chauffe par induction comporte un moyen (101) de guidage de flux.

2. Appareil selon la revendication 1, **caractérisé en ce que** le moyen (101) de guidage de flux comporte une entrée (101.6) et une sortie (101.7) et **en ce que** le corps de chauffe passe à travers le moyen (101) de guidage de flux de l'entrée à la sortie.

3. Appareil selon l'une des revendications précédentes, **caractérisé en ce que** le moyen (101) de guidage de flux est en forme de U ou de C.

4. Appareil selon l'une des revendications précédentes, **caractérisé en ce que** le moyen de guidage de flux comporte une section (101.4, 101.5) qui est orientée tangentiellement par rapport au parcours de mouvement du corps de chauffe.

5. Appareil selon l'une des revendications précédentes, **caractérisé en ce que** la conductivité électrique du moyen de guidage de flux est < 10 S/m, de préférence < 5 S/m et de façon plus préférable < 1 S/m.

6. Appareil selon l'une des revendications précédentes, **caractérisé en ce que** la perméabilité relative du moyen de guidage de flux est > 300 et ≤ 25000, de préférence > 500 et ≤ 20000.

7. Appareil selon l'une des revendications précédentes, **caractérisé en ce que** la conductivité électrique du corps de chauffe est < 1,0.10⁶ S/m à 1,12.10⁷ S/m.

8. Appareil selon l'une des revendications précédentes, **caractérisé en ce que** la perméabilité relative du corps de chauffe est > 2000 et ≤ 25000, de préférence > 2500 et ≤ 24000.

9. Appareil selon l'une des revendications précédentes, **caractérisé en ce qu'**il existe un entrefer (105) entre le moyen de guidage de flux et le corps de chauffe et **en ce que** ledit entrefer est de préférence < 5 mm, de façon plus préférable < 3 mm et idéalement < 1 mm.

10. Appareil de préférence selon l'une des revendications précédentes, **caractérisé en ce qu'**il comporte une multitude de moyens (20, 30). de formage et / ou de scellage et **en ce que** chaque moyen (20, 30) de formage et / ou de scellage comporte respectivement des moyens sans fil de mesure de température qui sont reliés directement ou indirectement aux moyens (20, 30) de formage et / ou de scellage.

11. Appareil selon l'une des revendications précédentes, **caractérisé en ce que** chaque moyen (20, 30) de formage et / ou de scellage comporte un émetteur (121) et / ou un récepteur (121) qui émet ou reçoit de l'énergie et / ou un signal sans fil.

12. Appareil de préférence selon l'une des revendications précédentes, **caractérisé en ce qu'**il comporte un moyen (130) de mesure de température par infrarouges et **en ce que** la mesure est réalisée dans un environnement obscur.

13. Appareil de préférence selon l'une des revendications précédentes, **caractérisé en ce que** les moyens (20, 30) de formage et / ou de scellage sont partiellement isolés.
